# EUROPEAN PATENT APPLICATION

(11) **EP 0 961 466 A1**
(43) Date of publication of application: **01.12.1999**
(21) Application number: 98202619.7
(22) Date of filing: 04.08.1998
(51) Int. Cl.: H04M 1/72

(54) **Feeding and recharging unit for portable telephone sets, in particular for cellular telephones**

(30) Priority: 29.05.1998 IT MI981195
(71) Applicant: BTICINO S.P.A., 20154 Milano (IT)
(72) Inventor: Santini, Ernesto, 28060 Sozzago (Novara) (IT)
(74) Representative: Zanardo, Giovanni

(57) **Abstract**

A feeding and recharging unit for portable telephone sets, in particular cellular telephones, comprising a telephone support (10) for wall-type mounting next to a walled-in box, a recharging base (20) to be housed inside said telephone support (10) having clamps (30) for connecting to a feeding network or a low voltage circuit, and an adapter (40), useful for various models of cellular telephones, which can be inserted into the recharging base (20) and provides a socket (50) contoured for inserting the base of various types of telephone sets.

## Description

This invention refers to a feeding and recharging unit for portable telephone sets, in particular cellular telephones.

At present, the recharging of the batteries of a cellular telephone occurs thanks to the connection of a support presenting a certain number of electrical contacts connected to the accumulator devices contained in the housing of the cellular set and the electrical supply network at 230 Volt, through the plug of a transformer circuit and an adapter and electrical cable connecting it to the telephone support.

This embodiment necessarily involves adopting a connecting cable of greater or lesser length for the recharging support, which could restrict the choice of the possible installations of the feeding unit, which may be more or less remote or uncomfortable to use with respect to an electrical power supply socket; moreover, every feeding and recharging unit is usually associated with a respective cellular phone model and it is impossible to recharge the accumulator batteries of a telephone set by using a support and a teed transformer especially built for another type of cellular phone model. Finally, the arrangement of a transformer device connected to an electrical power socket and electrical cable attached to a support having a contoured area for inserting the base of a telephone set is a possible source of accidents, owing to the extension of the electrical cable or the instability of the support and electrical contacts between the transformer plug and an electrical supply socket.

The scope of this invention is therefore to indicate a feeding and recharging unit for portable telephone sets, in particular for cellular telephones, capable of overcoming the mentioned drawbacks, or to produce a reliable feeding and recharging unit for cellular telephones, which can be secure from an electrical safety viewpoint and suitable for using with any model of telephone set currently available on the market.

Another scope of this invention is to produce a feeding and recharging unit for portable telephones, in particular for cellular telephones, whose harness wiring is relatively simplified with respect to the connecting systems and recharging supports off a traditional type.

A further scope of this invention is to indicate a feeding and recharging unit for portable telephone sets, in particular for cellular telephones, which allows mounting in walled-in boxes of a modular type for connecting to the supply network.

A further scope of this invention is to indicate a feeding and recharging unit for portable telephone sets, in particular for cellular telephones, which is simple and economical to produce, while using relatively inexpensive raw materials and electrical components.

These scopes, according to this invention, are achieved by producing a feeding and recharging unit for portable telephone sets, in particular for cellular telephones, according to claim 1, which is being referred to for brevity.

In an advantageous manner, the electrical accessory object of this invention allows mounting in walled-in boxes capable of containing modular compartments of a standard type, while at the same time assuring a power supply for the accumulator batteries of the various types of cellular telephone models currently available on the market.

One or more LED signaling diodes set into the front surface of an adapter allow controlling the charging status of the accumulator batteries and therefore the operability of the cellular telephone in case of its imminent usage.

It is also advantageously possible to connect the incoming telephone signal to the cellular telephone when the same is placed in the adapter mounting socket and the latter is connected to the supply network for recharging purposes.

It is finally possible to provide for a further accessory, which is capable of utilizing, even in a recharging position, a live voice telephone set in both a receiving and transmitting mode.

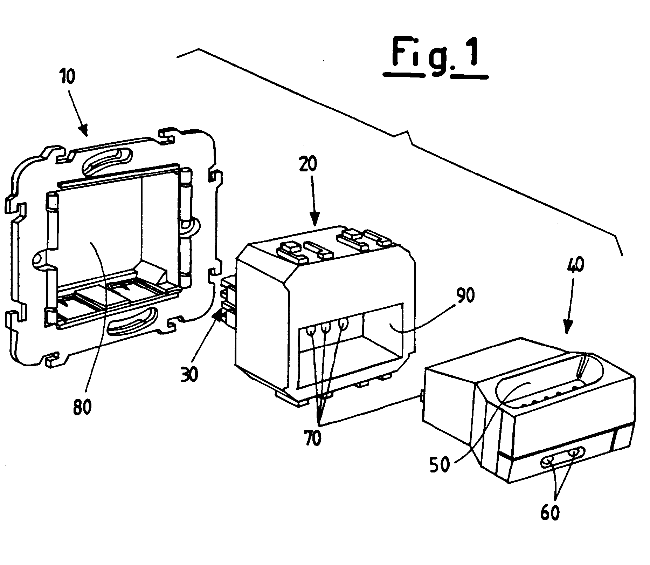

The characteristics and advantages of a feeding and recharging unit for portable telephone sets, in particular for cellular telephones according to this invention will be more evident from the following description, relating to an exemplifying and non-limiting embodiment and referred to the schematic drawing of Figure 1, which illustrates an exploded view of the electrical components utilized in the feeding and recharging unit according to the invention.

With reference to the mentioned figure, 10 indicates the telephone support, which is constituted by a modular dial attached to the walled-in box, 20 generically indicates a recharging element for the accumulator batteries of a portable telephone, in particular a cellular telephone, which may be mounted in the hollow 50 of an adapter 40 that constitutes the mounting socket for the base of the telephone and is contoured in a different manner depending on the chosen type of adapter 40, based on the various external housing models of the cellular telephones currently available on the market.

The adapter 40 also generally provides for one or more LED 60 diodes suitable for signaling the operating status of the adapter 40 itself and of the recharging level reached by the accumulator batteries contained in the cellular telephone. In practice, the support 10 is fixed to the wall, next to an electrical supply socket or a low voltage circuit, whose sockets are engaged by a number of connecting clamps 30, which take care of transferring the signal to the recharging element 20 and from there to the adapter 40, thanks to further connections generically indicated by 70.

The recharging element 20 is inserted with a snap-action inside the socket 80 of the support 10, while the adapter 40 is inserted into the socket 90 of the element 20, so as to respect the electrical connections 70.

The shape of the various elements composing the unit object of this invention is such as to make them easily removable and replaceable with others performing the same functions in case of a failure.

In particular, the adapter 40 can be substituted by another similar device which allows the mounting of a different type of cellular phone in the socket 50.

In this case the contour of the socket 50 will differ, depending on the base of the chosen adapter 40, so as to internally accept the various contours of the base of each cellular phone, which varies depending on the types of portable telephones produced and available on the market.

In addition, each component of the unit according to the invention presents geometric characteristics of a modular type, in the sense that the telephone supports 10, the recharging bases 20 and adapters 40 all have standard measurements suitable for mounting in walled-in boxes of a modular type.

It is evident that such an embodiment presupposes the possibility of connecting the telephone signal to the portable or cellular telephone, so as to make it possible to receive a call even if the telephone is mounted on its adapter 40, under battery recharging conditions.

It is moreover possible to provide for the usage of a further accessory to be connected to the portable telephone set, which also allows to communicate with the remote speaker in a live voice mode.

The description offered clearly illustrates the characteristics as well as the advantages of the feeding and recharging unit for portable telephone sets, in particular for cellular telephones, which is the object of this invention.

In particular, they cover the following aspects:
- the modularity and standardization of the components;
- the simplicity of installation and use;
- the possibility of connecting various models of cellular telephones to the feeding network, simply by substituting an adapter component;
- the possibility of visually and quickly controlling the battery charging status and operability of the cellular telephone;
- the possibility of connecting the set telephone signal in a recharging position;
- the possibility of connecting the set telephone signal in a recharging position for utilizing it in live voice mode;
- the relatively limited cost of the components used with respect to the traditional recharging systems, at an equal number of available auxiliary functions, based on the resulting advantages.

It is evident that numerous embodiments may be applied to the feeding and recharging unit for portable telephone sets, in particular for cellular telephones which is the object of this invention, without thereby abandoning the principles of novelty inherent in the inventive idea. It is equally evident that in he practical embodiment of the invention, the materials, shapes and dimensions of the details shown may be of any type depending on the requirements, and that the same may be substituted by others of a technically equivalent type.

## Claims

1. Feeding and recharging unit for portable telephone sets, in particular cellular telephones, characterized in that it comprises at least one supporting element (10) positioned next to a walled-in box of a type used for installing an electrical supply socket, at least one recharging device (20) for the accumulator batteries of a cellular telephone, to be connected to said supporting element (10), and at least one adapter (40), connected to said recharging device (20) where said telephone can be mounted.

2. Feeding and recharging unit according to claim 1, characterized in that said supporting element (10) is constituted by a dial attached to a walled-in box presenting at least one socket (80) for inserting said recharging device (20).

3. Feeding and recharging unit according to claim 1, characterized in that said recharging device (20) provides for a number of connecting clamps (30).

4. Feeding and recharging unit according to claim 3, characterized in that said clamps (30) are connected to a 230 Volt supply or low voltage network.

5. Feeding and recharging unit according to claim 1 and 2, characterized in that said recharging device (20) can be inserted inside said socket (80) with a snap-action.

6. Feeding and recharging unit according to claim 1, characterized in that said recharging device (20) presents at least one socket (90) for inserting said adapter (40), said socket (90) providing electrical connections (70) placed opposite the respective connections (70) of said adapter (40).

7. Feeding and recharging unit according to claim 1, characterized in that said adapter (40) comprises at least one socket (50) for mounting the base of said cellular telephone, said base (50) having a different contour depending on the type of cellular telephone to be inserted.

8. Feeding and recharging unit according to claim 7, characterized in that each adapter (40) presents a socket (50) contoured in a particular manner, each of said contours corresponding to a particular type or model of cellular telephone currently available on the market.

9. Feeding and recharging unit according to claim 1, characterized in that said adapter (40) provides for at least one visualizing device (60) of the charging status of said accumulator batteries of the cellular telephone.

10. Feeding and recharging unit according to claim 1, characterized in that it comprises at least one component of a modular type.

11. Feeding and recharging unit according to claim 1, 7 or 8, characterized in that said adapter (40) allows to receive an incoming telephone signal from said cellular telephone, said cellular telephone being mounted in said socket (50), in a recharging position for the accumulator batteries.

12. Feeding and recharging unit according to claim 1, characterized in that it also comprises a further accessory suitable for allowing a live voice communication between said cellular phone and at least one remote telephone set.
